# EUROPÄISCHE PATENTSCHRIFT

(11) **EP 0 452 559 B1**
(45) Veröffentlichungstag und Bekanntmachung des Hinweises auf die Patenterteilung: **26.05.1993**
(21) Anmeldenummer: 90124905.2
(22) Anmeldetag: 20.12.1990
(51) Int. Cl.: H04M 1/08

(54) **Lagerung für eine Schaltleiste eines Gabelumschalters innerhalb einer Fernsprechstation**
Mounting for a hookswitch lever in a telephone set
Support de levier d'un commutateur à crochet à l'intérieur d'un poste téléphonique

(30) Priorität: 20.04.1990 DE 9004515 U
(43) Veröffentlichungstag der Anmeldung: 23.10.1991
(73) Patentinhaber: SIEMENS AKTIENGESELLSCHAFT, 80333 München (DE)
(72) Erfinder: Veurman, Johannes-Roelof, Ing. grad., NL-7103 BN Winterswijk (NL); Reuschel, Jürgen, W-4290 Bocholt (NL)

(56) Entgegenhaltungen:
- DE-A- 3 203 130
- DE-C- 3 523 264
- DE-U- 9 004 515
- PATENT ABSTRACTS OF JAPAN, vol. 12, no. 111 (E-598)(2958) 8. April 1988 & JP-A-62 241 456

## Beschreibung

Die vorliegende Erfindung beinhaltet eine Lagerung für eine Schaltleiste eines Gabelumschalters gemäß dem Oberbegriff des Patentanspruches 1.

Lagerungen von Schaltleisten für Gabelumschalter von Fernsprechstationen sind in zahlreichen Ausführungsformen bekannt.

So ist durch die DE-C-35 23 246 ein Kompaktfernsprechapparat mit Ablageschale als Tisch- und Wandausführung bekannt, bei dem an der Bodenwanne die als Wippe gestaltete Schaltleiste in Lagerzapfen gehalten ist. Die Schaltleiste besteht aus zwei im wesentlichen gleichen Wippenschenkeln, die sowohl an der Längsachse als auch an der Mittelachse der Bodenwanne gespiegelt sind. Die Wippenschenkel sind einstückig mit einer Lagerachse der Schaltleiste verbunden. Dabei bildet die Lagerachse mit den ihr an beiden Enden zugeordneten Lagerzapfen, die wiederum auf Lagerböcken an der Bodenwanne gelagert sind, die Lagerung für die Schaltleiste.

Durch die DE-A-32 03 130 ist ebenfalls eine Schaltleiste bekannt, bei der zwei Hebelarme durch ein dünnwandiges Rohr miteinander verbunden sind, wobei diese Hebelarme mit weit auseinander, in der Nähe der Enden des Rohres angebrachten Lagerlappen in einer auf einer Leiterplatte im Bereich der Bodenwanne angebrachten Lagerböcken mit Hilfe von Lagerzapfen gelagert sind.

Ferner ist der in Patent Abstracts of Japan Vol. 12, No. 111, (E-598) (2958), 08.04.1988 und JP-A-62 241 456 veröffentlichten Literaturstelle eine Anordnung entnehmbar, bei der an der Schaltleiste stegförmig gestaltete Lagerzapfen vorgesehen sind, die in Lageraugen kreisförmigen Querschnitts von an der Bodenwanne angeordneten Lagerböcken eingreifen. Zum Einbringen der Lagerzapfen in die Lageraugen der Lagerböcke besitzen die Lagerböcke im Bereich der Lageraugen schmale Einschnitte, die in der Betätigungsstellung der Schaltleiste um 90° zu den stegförmigen Lagerzapfen angeordnet sind und deren lichte Weite etwas größer gehalten ist als die Dicke der stegförmigen Lagerzapfen.

Allen bekannten Anordnungen haftet der Nachteil an, daß außer einer aufwendigen Gestaltung der Schaltleisten deren Montage zum Einbringen der Lagerzapfen in die Lagerstellen der Lagerböcke zeitaufwendig ist. Außerdem sind bei derart gelagerten Schaltleisten große Toleranzen zwischen den Lagerzapfen und den Lagerstellen vorhanden, so daß eine exakte spielfreie Führung der Lagerzapfen an der Schaltleiste in den Lagerstellen nicht gewährleistet ist.

Der vorliegenden Erfindung liegt daher die Aufgabe zugrunde, eine Lagerung für eine Schaltleiste aufzuzeigen, die spritztechnisch einfach und ohne größeren Werkzeugaufwand herstellbar ist, wobei außerdem die Montage der Schaltleiste leicht durchführbar sein soll.

Gemäß der Erfindung wird diese Aufgabe durch die im kennzeichnenden Teil des Patentanspruches 1 angegebenen Merkmale gelöst.

Die Montage der Schaltleiste kann nunmehr in einfacher Weise dadurch erfolgen, daß die Schaltleiste zunächst mit ihren Zapfen in die frei zugänglichen Aufnahmen der Lagerböcke an der Bodenwanne eingelegt wird. Beim Aufsetzen des Gehäuseoberteils auf die Bodenwanne bilden die Aufnahmen der an dem Gehäuseoberteil angebrachten Lagerböcke mit den Aufnahmen der an der Bodenwanne vorgesehenen Lagerböcke gemeinsam die Lagerstellen für die Schaltleiste. Eine zusätzliche Sicherung der Lagerstellen kann dabei durch Verschrauben von Bodenwanne und Gehäuseoberteil im Bereich der Lagerböcke erfolgen, so daß auch bei Auftreten von Umwelteinflüssen, z. B. Wärme, stets eine sichere Lagerung der Schaltleiste gewährleistet ist.

Zweckmäßig sind die Lagerböcke einstückig mit den Gehäuseteilen der Fernsprechstationen verbunden und besitzen Versteifungsrippen, um deren Verformen beim Zusammenbau der Fernsprechstation zu verhindern.

Als besonders vorteilhaft hat es sich erwiesen, die Endbereiche der am Gehäuseoberteil angeordneten Lagerböcke mit einer trapezförmigen Vertiefung zu versehen, während die Endbereiche der an der Bodenwanne angeordneten Lagerböcke den Endbereichen der am Gehäuseoberteil formmäßig angepaßte trapezförmige Erhebungen besitzen. Dadurch wird bei der Montage der Fernsprechstation eine zwangsläufige Zusammenführung und Zentrierung aufgrund der durch die Trapezform gebildeten Einführungsschräge geschaffen. Diese trapezförmige Vertiefung bzw. Erhebung an den Endbereichen der Lagerböcke läßt sich spritztechnisch einfach realisieren und bringt den weiteren Vorteil mit sich, daß die Lagertoleranzen erheblich verringert werden.

Die Erfindung soll im folgenden anhand eines Ausführungsbeispiels näher erläutert werden.

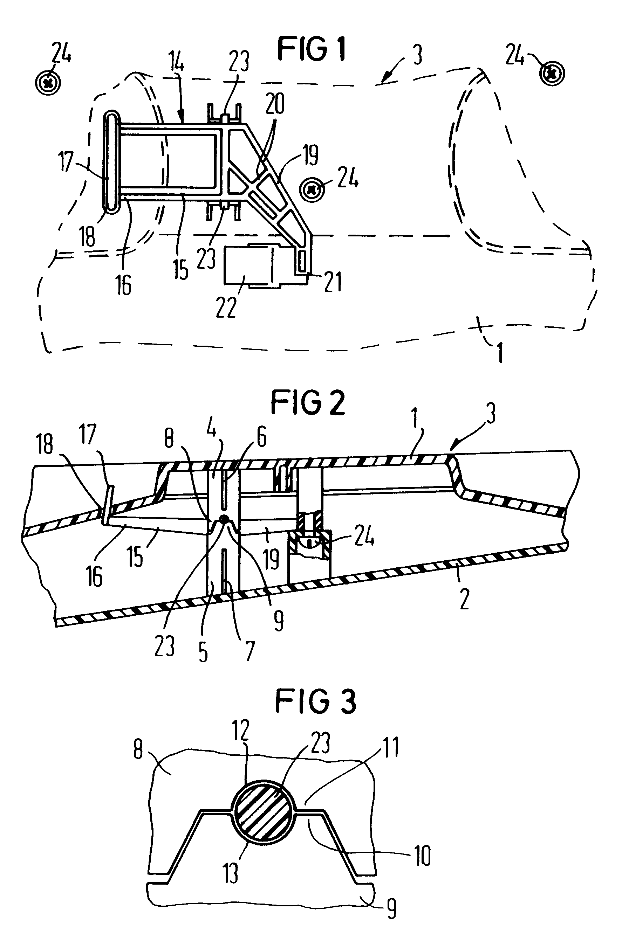

Es zeigt
Figur 1 eine Aufsicht auf die Lagerstelle für die Schaltleiste des Gabelumschalters bei angedeutetem Gehäuseoberteil der Fernsprechstation,
Figur 2 eine geschnittene Seitenansicht der Fernsprechstation mit der Lagerstelle für die Schaltleiste,
Figur 3 die Ausbildung der Lagerstelle.

Innerhalb einer Fernsprechstation soll die Lagerung für die als Wippe ausgebildete Schaltleiste eines Gabelumschalters auf möglichst einfache und montagefreundliche Weise erfolgen. Zu diesem Zweck weisen das Gehäuseoberteil 1 sowie die Bodenwanne 2 der Fernsprechstation 3 jeweils zwei Lagerböcke 4 und 5 auf, die mit den genannten Teilen 1 und 2 einstückig verbunden sind. Diese Lagerböcke 4 und 5 besitzen Versteifungsrippen 6 und 7, um deren Verbiegen bei der Montage auszuschließen. In ihren freien Endbereichen 8 bzw. 9 besitzen die an dem Gehäuseoberteil 1 angebrachten Lagerböcke 4 trapezförmige Vertiefungen 11, während die mit der Bodenwanne 2 verbundenen Lagerböcke 5 diesen trapezförmigen Vertiefungen angepaßte trapezförmige Erhebungen 10 aufweisen. Jeweils im Bereich ihres freien Endes besitzen die trapezförmigen Erhebungen 10 der Lagerböcke 5 Aufnahmen 13 halbkreisförmigen Querschnitts, während die mit den Lagerstellen 13 zusammenarbeitenden Aufnahmen 12 halbkreisförmigen Querschnitts an den Lagerböcken 4 im Bereich der Basis der trapezförmigen Vertiefungen 11 angeordnet sind.

Die Schaltleiste 14 ist in ihrem Bereich 15 rahmenförmig gestaltet, wobei ein an dem freien Ende 16 angeordneter Steg 17 die Öffnung 18 im Gehäuseoberteil 1 durchgreift. An diesen rahmenförmigen Bereich 15 schließt sich ein mehrfach abgewinkelter Bereich 19 an, der aus Gründen der Versteifung durch mehrere Rippen 20 gebildet ist. Der freie Endbereich 21 dieses mehrfach abgewinkelten Bereiches 19 wirkt auf den Gabelumschalter 22 der Fernsprechstation 3 ein. Im Verbindungsbereich des rahmenförmigen Bereiches 15 und des mehrfach abgewinkelten Bereiches 19 sind an der Schaltleiste nach außen weisende kurze Zapfen 23 kreisförmigen Querschnitts angebracht.

Bei der Montage der Fernsprechstation 3 muß bei dieser Ausführungsform nur noch die Schaltleiste 14 mit ihren Zapfen 23 in die halbkreisförmigen Aufnahmen 13 der Lagerböcke 5 eingelegt werden. Beim Aufsetzen des Gehäuseoberteils 1 greift jeweils die trapezförmige Erhebung 10 der Lagerböcke 5 in die trapezförmige Vertiefung 11 der Lagerböcke 4 ein, so daß sich aufgrund der durch die Gestaltung der beiden Endbereich der Lagerböcke ergebenden Einführungsschrägen eine formmäßige Verbindung dieser Endbereiche ergibt. Zwischen diesen beiden Aufnahmen 12 und 13 der Endbereich 10 und 11 der Lagerböcke 4 und 5 werden die Zapfen 23 der Schaltleiste geführt und gehalten. Zur Sicherung dieser Lagerstellen werden das Gehäuseoberteil 1 und die Bodenwanne 2 durch im Bereich der Lagerböcke 4 und 5 angebrachte Schrauben 24 miteinander verbunden.

## Patentansprüche

1. Lagerung für eine innerhalb einer ein Gehäuseoberteil (1) und eine Bodenwanne (2) aufweisenden Fernsprechstation schwenkbar angeordnete Schaltleiste (14) eines Gabelumschalters (22), wobei die Schaltleiste Lagerzapfen aufweist, die in Lagerböcken im Bereich der Bodenwanne (2) gelagert sind, **dadurch** **gekennzeichnet,** daß die Lagerstellen jeweils durch am Gehäuseoberteil (1) und der Bodenwanne (2) vorgesehene und zueinander fluchtende Lagerböcke (4, 5) gebildet sind, die jeweils in ihren freien Endbereichen (8, 9) frei zugängliche Aufnahmen (12, 13) für die an der Schaltleiste angeordneten Zapfen (23) aufweisen, wobei das Gehäuseoberteil (1) und die Bodenwanne (2) im Bereich der Lagerböcke (4, 5) miteinander verschraubt sind.

2. Lagerung für eine Schaltleiste nach Anspruch 1, **dadurch gekennzeichnet**, daß die Lagerböcke (4, 5) einstückig mit dem Gehäuseoberteil (1) und der Bodenwanne (2) verbunden sind und Versteifungsrippen (6, 7) aufweisen.

3. Lagerung für eine Schaltleiste nach Anspruch 1, **dadurch gekennzeichnet**, daß die Endbereiche (8) der am Gehäuseoberteil (1) angeordneten Lagerböcke mit einer trapezförmigen Vertiefung (11) versehen sind, während die Endbereiche (9) der an der Bodenwanne (2) angeordneten Lagerböcke (5) den Endbereichen (8) der am Gehäuseoberteil (1) formmäßig angepaßte trapezförmige Erhebungen (10) besitzen.

4. Lagerstelle nach Anspruch 1 und 3, **dadurch** **gekennzeichnet,** daß die Zapfen (23) an der Schaltleiste (14) einen kreisförmigen Querschnitt aufweisen, während die Aufnahmen (12, 13) in den Lagerböcken (4, 5) halbkreisförmig gestaltet sind.

## Claims

1. Bearing for a switching bar (14) pivotably arranged inside a telephone station exhibiting a housing top (1) and a bottom well (2) of a cradle switch (22), the switching bar exhibiting bearing pins which are supported in bearing blocks in the area of the bottom well (2), characterised in that the bearing points are in each case formed by bearing blocks (4, 5) provided at the housing top (1) and the bottom well (2) and aligned with one another, which have in each case in their free end areas (8, 9) freely accessible receptacles (12, 13) for the pins (23) arranged at the switching bar, the housing top (1) and the bottom well (2) being screwed together in the area of the bearing blocks (4, 5).

2. Bearing for a switching bar according to Claim 1, characterised in that the bearing blocks (4, 5) are connected integrally to the housing top (1) and the bottom well (2) and have stiffening ribs (6, 7).

3. Bearing for a switching bar according to Claim 1, characterised in that the end areas (8) of the bearing blocks arranged at the housing top (1) are provided with a trapezoidal recess (11) whilst the end areas (9) of the bearing blocks (5) arranged at the bottom well (2) have trapezoidal projections (10) matching in shape the end areas (8) of the (lacuna) at the housing top (1).

4. Bearing point according to Claim 1 and 2, characterised in that the pins (23) at the switching bar (14) have a circular cross-section whilst the receptacles (12, 13) in the bearing blocks (4, 5) are of semicircular shape.

## Revendications

1. Support pour une barrette de commutation (14) d'un crochet commutateur (22), qui est disposée, de manière à pouvoir pivoter, à l'intérieur d'un poste téléphonique qui possède une partie supérieure de boîtier (1) et une cuvette de fond (2), la barrette de commutation possédant des tourillons qui sont supportés dans des paliers au niveau de la cuvette du fond (2), caractérisé par le fait que les points de support sont formés respectivement par des paliers (4,5), qui sont prévus sur la partie supérieure de boîtier (1) et sur la cuvette du fond (2), sont alignés et possèdent, respectivement dans leurs zones libres d'extrémité (8,9), des logements librement accessibles (12,13) pour les tourillons (23) prévus sur la barrette de commutation, la partie supérieure de boîtier (1) et la cuvette de fond (2) étant réunies par vissage au niveau des paliers (4,5).

2. Support pour une barrette de commutation suivant la revendication 1, caractérisé par le fait que les paliers (4,5) sont réunis d'un seul tenant à la partie supérieure de boîtier (1) et à la cuvette de fond (2) et possèdent des nervures de renforcement (6,7).

3. Support pour une barrette de commutation suivant la revendication 1, caractérisé par le fait que les zones d'extrémité (8) des paliers situés sur la partie supérieure de boîtier (1) sont pourvues d'un renfoncement trapézoïdal (11), tandis que les zones d'extrémité (9) des paliers (5) disposés sur la cuvette de fond (2) possèdent des bossages trapézoïdaux (10) dont la forme est adaptée aux zones d'extrémité (8) des paliers disposés sur la partie supérieure de boîtier (1).

4. Support pour une barrette de commutation suivant les revendications 1 et 3, caractérisé par le fait que les tourillons (23) situés sur la barrette de commutation (14) possèdent une section transversale circulaire, tandis que les logements (12,13) présents dans les paliers (4,5) sont agencés avec une forme semi-circulaire.
